# EUROPEAN PATENT SPECIFICATION

(11) **EP 3 974 797 B1**
(45) Date of publication and mention of the grant of the patent: **06.09.2023**
(21) Application number: 20198717.9
(22) Date of filing: 28.09.2020
(51) Int. Cl.: G01M 1/08, G01M 1/22

(54) **MEASURING DEVICE FOR MEASURING IMBALANCES**
MESSGERÄT ZUR MESSUNG VON UNWUCHTEN
DISPOSITIF DE MESURE DES DÉSÉQUILIBRES

(43) Date of publication of application: 30.03.2022
(73) Proprietor: Balance Systems S.r.L., 20145 Milano (IT)
(72) Inventor: TRIONFETTI, Gianni, 20041 Agrate Brianza (Monza Brianza) (IT)
(74) Representative: Lunati & Mazzoni S.r.L.

(56) References cited:
- DE-A1- 3 601 182
- US-A- 4 981 043
- US-A1- 2015 290 772

## Description

This invention relates to a device for measuring imbalances in rotating parts of the type specified in the preamble to the first claim.

Similar devices are described in patent application US 4 981 043 A, DE 36 01 182 A1 and US 2015/290772 A1.

Measuring devices for measuring imbalances in rotating parts are currently known. They are designed for balancing the same rotating part.

In fact, a perfectly balanced rotating part has a centre of mass that lies exactly along the rotation axis. As a consequence, during rotation, the same part does not generate any centrifugal force.

In contrast, the imbalances, e.g. axial imbalances, of rotating parts generate centrifugal forces equal to the square of the rotational speed for the mass of the rotating part for the distance of the centre of mass from the rotation axis.

By balancing the rotating part, you act on the only variable that can be changed, reducing the distance of the centre of mass from the rotation axis to a minimum, or eliminating it.

Measuring devices for measuring imbalances, for example, in rotating parts measure the imbalance itself by measuring vibrations or forces perpendicular to the rotation axis that are generated during rotation. These vibrations are, in fact, largely due to the centrifugal forces generated by the imbalances.

More specifically, imbalance measuring devices comprise "V"-shaped supports for the rotation shaft of the part being measured, on which the part is placed.

The part being measured is then placed in contact with a belt or another means that rotates it.

Detection devices that measure the vibrations or forces, by detecting imbalances, are also connected to the part supports.

In addition, measuring devices for measuring imbalances in rotating parts are generally part of balancing devices, which comprise means to add, move, or remove masses from the rotating parts in order to balance them.

Examples of known balancing devices are contained in the European patents: EP-B-1158650, EP-B-0836087, and EP-B-0455127 of the same applicant.

The prior art described here has some major drawbacks.

In particular, the measurement of the imbalance is modified by the mechanical connections of the supports for the part being measured, which limit its movement and/or alter its directions.

To remedy this drawback, the supports for the part being processed are attached to the remaining part of the machine using leaf springs, which allow a more natural mobility of the part being processed.

However, this solution only partially solves said drawbacks.

In addition, the mechanical system generates different resonance frequencies, at which the measurement of the part is very problematic.

Finally, said measuring devices are very complex and subject to malfunction.

In this context, the technical task underlying this invention is to devise a measuring device for measuring imbalances in rotating parts that is capable of substantially overcoming at least some of the above-mentioned drawbacks.

In the context of said technical task, one important purpose of the invention is to obtain a measuring device for measuring imbalances in rotating parts that is more precise.

Another important purpose of the invention is to provide a measuring device for measuring imbalances in rotating parts that is strong and economical.

The technical task and specified purposes are achieved with a measuring device for measuring imbalances in rotating parts as claimed in the appended claim 1.

Preferred technical solutions are set forth in the dependent claims.

The features and advantages of the invention will be apparent from the detailed description of preferred embodiments of the invention, with reference to the accompanying drawings, in which:

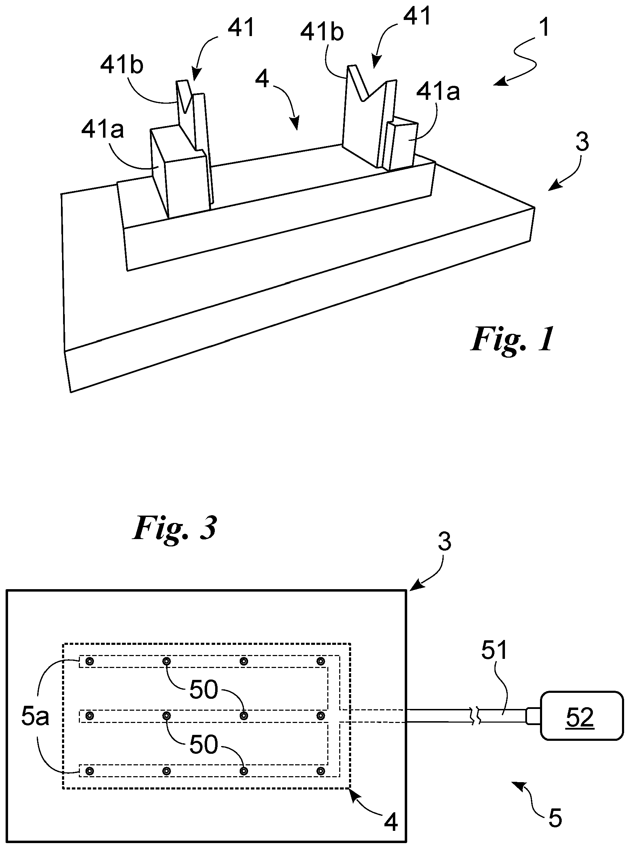

**Fig. 1** shows a perspective view of a portion of the device for measuring axial imbalance in rotating parts according to the invention;

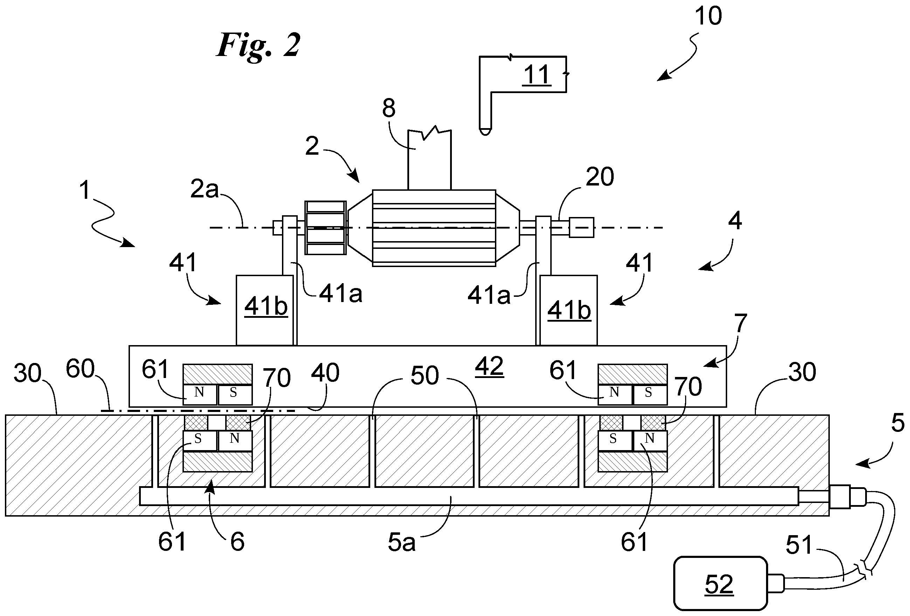

**Fig. 2** illustrates a median section of the device for measuring axial imbalance in rotating parts according to the invention; and
**Fig. 3** is a view from above of the device for measuring axial imbalance in rotating parts according to the invention.

Unless otherwise stated, the measurements and data reported in this text shall be considered as performed in International Standard Atmosphere ICAO (ISO 2533:1975).

With reference to the figures, the reference number **1** globally denotes the measuring device for axial imbalance according to the invention.

It is designed to measure imbalances, in particular dynamic imbalance, in rotating parts **2.** Said parts 2 are rotatable about a rotation axis **2a** preferably through a shaft **20.** The rotating parts 2 are preferably electric motor rotors or the like. Alternatively, the rotating parts 2 can be: rotors of other types of machines, shafts, turbines, propellers or any other object that is rotated at high speed during use.

The axial imbalance measuring device 1 comprises a stand **3** and a support platform **4.**

The stand 3 is preferably the portion in contact with the support plane that sustains the whole device 1. It also comprises a base surface **30** designed to sustain the support platform 4. The base surface 30 is preferably flat and, when in use, preferably arranged along the horizontal plane, perpendicular to the gravitational gradient.

The support platform 4 comprises a resting surface **40**, opposite the base surface 30, sustaining the support platform 4 itself. The resting surface 40 is preferably flat and, when in use, is preferably arranged along the horizontal plane, perpendicular to the gravitational gradient.

The support platform 4 comprises sustaining means **41** for the rotating part 2, which are suitable for sustaining the rotating part 2 and for enabling it to rotate along the rotation axis 2a.

The sustaining means **41** preferably consist of two brackets **41a,** conveniently stiff, comprising seats **41b**, for the rotating part 2, in particular for the shaft 20. The seats 41b are preferably elements with a "V"-shaped cavity turned upwards or forkshaped, or something else. The brackets 41a are, in addition, preferably adjustable in terms of height and/or reciprocal distance.

The support platform 4 preferably comprises, in addition, a second base **42** for sustaining the sustaining means 41 and, preferably, defines the resting surface 40.

The imbalance measuring device 1 also comprises channelling means **5** for channelling pressurized gasses, suitable for defining an air bearing between the resting surface 40 and the base surface 30.

The channelling means 5 are preferably partially formed in at least one, and preferably only one, of the following: the support platform 4 and the stand 3, most preferably on the latter. More preferably, a terminal portion **5a** of the channelling means 5 is present on the stand 3.

The stand 3 comprises, in addition, ejector nozzles **50**, which constitute the final part of the channelling means 5 and of the terminal portion 5a. The ejector nozzles 50 are basically and preferably small holes that face the base surface 30. There are, preferably, a multitude of ejector nozzles 50, conveniently arranged according to a configuration so as to occupy a wide portion of the resting surface 40. For example, there may be between 4 and 20 nozzles 50, or another number.

The terminal portion **5a** of the channelling means 5 is, in addition, attached to a second portion **51** external to the stand 3 and preferably comprises tubes, for example flexible ones made of polymer, possibly with attachments. The second portion is, in addition, conveniently connected to means **52** for supplying the pressurized gasses, such as a pressurising pump or cylinder or the like.

Said air bearing between the resting surface 40 and the base surface 30 means, therefore, that the support platform 4 can be completely free of mechanical attachments with the stand 3.

The imbalance measuring device 1 comprises, in addition, magnetic constraint means **6** between said resting surface 40 and the base surface 30, the magnetic constraint means 6 being suitable for attaching the support platform 4 to the stand 3 along a constraint surface **60**. The constraint surface 60 is preferably parallel to the base surface 30 and to the resting surface 40 and, thus, it is also preferably horizontal and flat when in use.

There are, therefore, preferably magnets **61**, preferably permanent and of alternating and opposing polarities, both inside the stand 3 so that they are close to the base surface 30, and inside the support platform 4 so that they are close to the resting surface 40. There are, preferably, four or more magnets 61 and they are, preferably, arranged with rectangular symmetries.

The constraint means 6 thus make it possible to horizontally attach the support platform 4 to the stand 3 without impeding the creation of the air bearing.

The imbalance measuring device 1 comprises vibration detection means 7, coinciding with the magnetic constraint means 6

According to the claimed invention, the vibration detection means comprises electrical windings **70**, including coils or reels, placed near the magnetic constraint means 6 so that the movement of the latter, due to vibrations caused by the imbalances, generates an electric current that can be measured.

The electrical windings 70 are preferably arranged on the stand 3 and preferably they face, or are very close to, the base surface 30. They are, in addition, conveniently connected to external electronics for measuring current, proportional to the movement of the support platform 4 in relation to the stand 3.

The axial imbalance measuring device 1 comprises, in addition, preferably, handling means 8 for moving the rotating part 2. These are known to the person skilled in the art and, for example, comprise a belt designed to be moved and placed in contact with the rotating part 2 so as to make it rotate on the support platform 4.

The imbalance measuring device 1 is, preferably, inserted in a balancing machine **10** that comprises the imbalance measuring device 1 itself and imbalance correction means **11.** The latter are known in themselves and are designed to add, move, or remove masses from rotating parts in order to balance the same.

The operation of the imbalance measuring device 1 and of the balancing machine 10, previously described in structural terms is the following. It defines, in addition, a new method for measuring imbalances in rotating parts and, also, a new method for balancing the rotating parts.

The procedure involves, above all, the mounting of the part 2 to be measured on the support platform 4, in particular on the seats 41b.

The support platform 4 including the part 2 is connected to the stand 3 and attached to the same by means of constraint means 6, in particular by means of magnets 61.

The resting surface 40 is, thus, in contact with the base surface 30. These surfaces are, preferably, identical, flat, and horizontal, thus wholly in contact with each other.

They are, in addition, made perfectly flat by means of special, known production processes.

An air bearing is thus created between the resting surface 40 and the base surface 30.

In particular, the means 52 for supplying gasses supply the pressurized gasses, for example under pressure ranging between 2 and 3 bars, to the channelling means 5. The gases pass through the second portion 51 and the terminal portion 5a and escape through the ejector nozzles 50.

The air ejected under pressure raises the support platform 4 distancing the resting surface 40 from the base surface 30, preferably by distances in the order of micrometres or tens of micrometres. The nozzles 50 are conveniently arranged in a uniform manner along the resting surface 40 so as to raise the support platform 4, keeping it perfectly horizontal.

The support platform 4 is raised, the part 2 is preferably rotated using the handling means 8.

While the air bearing is there and the part 2 is rotating, the imbalance is measured. In fact, the rotating part 2 reaches different rotation speeds and, if there is an imbalance, this generates centrifugal forces. The latter, in turn, generate vibrations with a period that is identical to the rotation period.

The vibrations move the whole support platform 4, in particular parallel to the base surface 30. The magnets 61 of the support platform 4 thus move in relation to the electrical windings 70 placed on the stand 3 (or vice versa). This latter movement causes a current in the windings themselves that is detected by the measuring means that correlate the vibration to an imbalance, quantified and localised, and they signal the presence of the same.

The balancing method involves correcting the imbalance, by means of the imbalance correction means 11, in a known way.

The measurement and correction can occur several times until the part 2 has the desired tolerances.

The imbalance measuring device 1, the balancing machine 10, and the methods described according to the invention entail significant advantages.

In fact, the support platform 4, including the rotating part 2 is, in large part, free from mechanical constraints with the base 3. Consequently, the measurements are not influenced by the latter and are much more precise.

In addition, the device 1 is structurally composed of only a few parts, is therefore simple, robust, and economical.

Another advantage is due to the absence or reduced number of system resonant frequencies.

The invention is susceptible to variations falling within the scope of the inventive concept defined by the claims.

## Claims

1. A measuring device (1) for measuring imbalances of rotating parts (2) that rotate around a rotation axis (2a),
said measuring device (1) comprising:
- a stand (3),
- a support platform (4) comprising:
- a resting surface (40) sustaining said support platform (4) on said stand (3),
- sustaining means (41) for said rotating part (2), which are suitable to sustain said rotating part (2) and allow its rotation around said rotation axis (2a),
- said stand (3) comprising:
- a base surface (30) opposite said resting surface (40),
- said measuring device (1) for measuring axial imbalance comprises channelling means (5) for channelling pressurized gasses, suitable to define an air bearing between said resting surface (40) and said base surface (30), **characterized in that** the measuring device (1) comprises magnetic constraint means (6) located in the vicinity of said base surface (30) and said resting surface (40), said magnetic constraint means being suitable to constrain said support platform (4) to said stand (3) along a constraint surface (60), wherein the measuring device (1) comprises vibration detection means (7) at least partly coinciding with said magnetic constraint means (6), wherein said vibration detection means (7) further comprises electrical windings (70) interacting with the magnetic field generated by said constraint means (6) and suitable for signalling movements between said resting surface (40) and said base surface (30).

2. The measuring device (1) according to the preceding claim, wherein said magnetic constraint means (6) consist of permanent magnets.

3. The measuring device (1) according to any one of the preceding claims, wherein said base surface (30), said resting surface (40) and said constraint surface (60) are flat and, in use, horizontal.

4. The measuring device (1) according to any one of the preceding claims, wherein said channelling means (5) comprise ejector nozzles (50) arranged on said stand (3) and facing said base surface (30).

5. A balancing machine (10) comprising a measuring device (1) for measuring imbalances according to any one of the preceding claims, and unbalance correction means (11).

6. A measuring method for measuring imbalances of rotating parts (2) by means of measuring device (1) according to any one of the preceding claim,
said measuring method for measuring imbalances comprising:
- generating an air bearing between said resting surface (40) and said base surface (30),
- driving said part (2) into rotation,
- measuring the imbalance of said part (2) while said air bearing is present and said part (2) is in rotation.

7. A method for balancing rotating parts (2) comprising the method for measuring imbalances of rotating parts (2) according to the preceding claim, and the correction of said imbalance.

## Patentansprüche

1. Messvorrichtung (1) zum Messen von Unwuchten von rotierenden Teilen (2), die sich um eine Drehachse (2a) drehen,
wobei die Messvorrichtung (1) umfasst:
- ein Stativ (3),
- eine Stützplattform (4) mit:
- eine Auflagefläche (40), die die Auflageplattform (4) auf dem Ständer (3) trägt,
- Stützmittel (41) für das rotierende Teil (2), die geeignet sind, das rotierende Teil (2) zu stützen und seine Drehung um die Drehachse (2a) zu ermöglichen,
- wobei der Ständer (3) umfasst:
- eine Grundfläche (30) gegenüber der Auflagefläche (40),
- die Messvorrichtung (1) zur Messung der axialen Unwucht Kanalisierungsmittel (5) zum Kanalisieren von Druckgasen umfasst, die geeignet sind, ein Luftlager zwischen der Auflagefläche (40) und der Basisfläche (30) zu definieren,
- **dadurch gekennzeichnet, dass** die Messvorrichtung (1) magnetische Zwangsmittel (6) umfasst, die sich in der Nähe der Basisfläche (30) und der Auflagefläche (40) befinden, wobei die magnetischen Zwangsmittel geeignet sind, die Trägerplattform (4) entlang einer Zwangsfläche (60) an den Ständer (3) zu binden,
wobei die Messvorrichtung (1) Schwingungserfassungsmittel (7) umfasst, die zumindest teilweise mit den magnetischen Zwangsmitteln (6) zusammenfallen,
wobei das Schwingungserfassungsmittel (7) ferner elektrische Wicklungen (70) umfasst, die mit dem von dem Zwangsmittel (6) erzeugten Magnetfeld in Wechselwirkung stehen und geeignet sind, Bewegungen zwischen der Ruhefläche (40) und der Basisfläche (30) zu signalisieren.

2. Die Messvorrichtung (1) nach dem vorhergehenden Anspruch, wobei die magnetischen Zwangsmittel (6) aus Permanentmagneten bestehen.

3. Messvorrichtung (1) nach einem der vorhergehenden Ansprüche, wobei die Grundfläche (30), die Auflagefläche (40) und die Zwangsfläche (60) flach und im Gebrauch horizontal sind.

4. Messvorrichtung (1) nach einem der vorhergehenden Ansprüche, wobei die Kanalisierungsmittel (5) Ejektordüsen (50) umfassen, die auf dem Ständer (3) angeordnet und der Grundfläche (30) zugewandt sind.

5. Auswuchtmaschine (10) mit einer Messvorrichtung (1) zum Messen von Unwuchten nach einem der vorangehenden Ansprüche und mit Unwuchtausgleichsmitteln (11).

6. Messverfahren zum Messen von Unwuchten an rotierenden Teilen (2) mittels einer Messeinrichtung (1) nach einem der vorhergehenden Ansprüche,
wobei das Messverfahren zum Messen von Unwuchten umfasst:
- Erzeugen eines Luftlagers zwischen der Auflagefläche (40) und der Grundfläche (30),
- das Teil (2) in Drehung versetzt wird,
- Messen der Unwucht des Teils (2), während das Luftlager vorhanden ist und das Teil (2) in Drehung ist.

7. Verfahren zum Auswuchten von rotierenden Teilen (2), umfassend das Verfahren zum Messen der Unwucht von rotierenden Teilen (2) nach dem vorhergehenden Anspruch und den Ausgleich der Unwucht.

## Revendications

1. Dispositif de mesure (1) pour mesurer les déséquilibres de pièces rotatives (2) qui tournent autour d'un axe de rotation (2a),
Ce dispositif de mesure (1) comprend
- un support (3),
- une plate-forme de support (4) comprenant
- une surface de repos (40) soutenant ladite plate-forme de support (4) sur ledit support (3),
- des moyens de soutien (41) pour ladite partie rotative (2), qui sont aptes à soutenir ladite partie rotative (2) et à permettre sa rotation autour dudit axe de rotation (2a),
- ledit support (3) comprenant
- une surface de base (30) opposée à ladite surface de repos (40),
- ledit dispositif de mesure (1) du déséquilibre axial comprend des moyens de canalisation (5) de gaz sous pression, aptes à définir un palier d'air entre ladite surface de repos (40) et ladite surface de base (30),
- **caractérisé en ce que** le dispositif de mesure (1) comprend un moyen de contrainte magnétique (6) situé à proximité de ladite surface de base (30) et de ladite surface de repos (40), ledit moyen de contrainte magnétique étant apte à contraindre ladite plate-forme de support (4) audit support (3) le long d'une surface de contrainte (60), dans lequel le dispositif de mesure (1) comprend des moyens de détection des vibrations (7) coïncidant au moins en partie avec lesdits moyens de contrainte magnétique (6),
dans lequel ledit moyen de détection des vibrations (7) comprend en outre des enroulements électriques (70) interagissant avec le champ magnétique généré par ledit moyen de contrainte (6) et aptes à signaler les mouvements entre ladite surface de repos (40) et ladite surface de base (30).

2. Dispositif de mesure (1) selon la revendication précédente, dans lequel lesdits moyens de contrainte magnétiques (6) sont constitués d'aimants permanents.

3. Le dispositif de mesure (1) selon l'une quelconque des revendications précédentes, dans lequel ladite surface de base (30), ladite surface de repos (40) et ladite surface de contrainte (60) sont planes et, en utilisation, horizontales.

4. Dispositif de mesure (1) selon l'une quelconque des revendications précédentes, dans lequel lesdits moyens de canalisation (5) comprennent des buses d'éjection (50) disposées sur ledit support (3) et faisant face à ladite surface de base (30).

5. Machine à équilibrer (10) comprenant un dispositif de mesure (1) des déséquilibres selon l'une quelconque des revendications précédentes, et des moyens de correction des déséquilibres (11).

6. Procédé de mesure des balourds de pièces tournantes (2) au moyen du dispositif de mesure (1) selon l'une quelconque de la revendication précédente,
ledit procédé de mesure des balourds comprenant :
- générer un palier d'air entre ladite surface de repos (40) et ladite surface de base (30),
- entraîner en rotation ladite pièce (2),
- mesurer le déséquilibre de ladite pièce (2) pendant que ledit palier d'air est présent et que ladite pièce (2) est en rotation.

7. Procédé d'équilibrage de revendications rotatives (2) comprenant le procédé de mesure de déséquilibres de revendications rotatives (2) selon la revendication précédente, et la correction dudit déséquilibre.
